# EUROPÄISCHE PATENTSCHRIFT

(11) **EP 0 763 570 B1**
(45) Veröffentlichungstag und Bekanntmachung des Hinweises auf die Patenterteilung: **29.03.2000**
(21) Anmeldenummer: 96810535.3
(22) Anmeldetag: 13.08.1996
(51) Int. Cl.: C09B 62/09, C09B 62/513

(54) **Reaktivfarbstoffe, ihre Herstellung und Verwendung**
Reactive dyes, their preparation and use thereof
Colorants réactifs, leur préparation et utilisation

(30) Priorität: 22.08.1995 CH 239595
(43) Veröffentlichungstag der Anmeldung: 19.03.1997
(73) Patentinhaber: Ciba Specialty Chemicals Holding Inc., 4057 Basel (CH)
(72) Erfinder: Ruhlmann, Edmond, Dr., 68300 Saint-Louis (FR); Fekete, Laszlo, 4126 Bettingen (CH)

(56) Entgegenhaltungen:
- EP-A- 0 458 743
- EP-A- 0 495 753
- EP-A- 0 625 549
- DE-A- 2 314 946
- RESEARCH DISCLOSURE, Bd. 219, Nr. 026, 10.Juli 1982, HAVANT GB, Seite 257 XP002021704 ANONYMOUS: "cellulose reactive dyes"

## Beschreibung

Die vorliegende Erfindung betrifft neue Azoreaktivfarbstoffe, Verfahren zu ihrer Herstellung und ihre Verwendung.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind Verbindungen der Formel 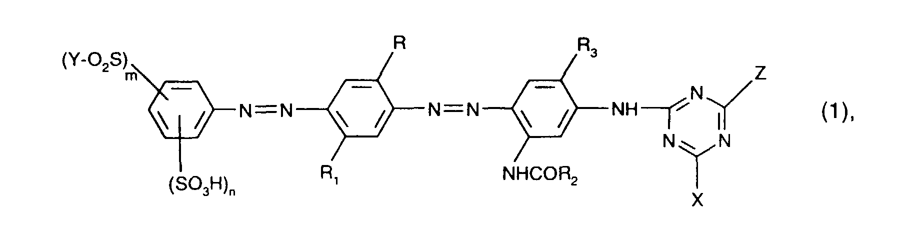 worin R C₁-C₄-Alkyl oder unsubstituiertes oder im Alkylteil durch Hydroxy, C₁-C₄-Alkoxy oder Sulfato substituiertes C₁-C₄-Alkoxy bedeutet, R₁ eine Gruppe -NHCOR₂' ist, R₂ und R₂' unabhängig voneinander je C₁-C₄-Alkyl oder -NH₂ bedeuten, R₃ Wasserstoff, C₁-C₄-Alkyl, C₁-C₄-Alkoxy oder Halogen ist, X für Fluor steht, Y Vinyl oder einen Rest -CH₂-CH₂-U bedeutet und U für eine Abgangsgruppe steht, m die Zahl 0 oder 1 und n eine Zahl von 0 bis 2 bedeuten, wobei die Summe (n+m) ≥ 1 beträgt, und Z ein nicht-reaktiver Aminorest oder ein Rest der Formel 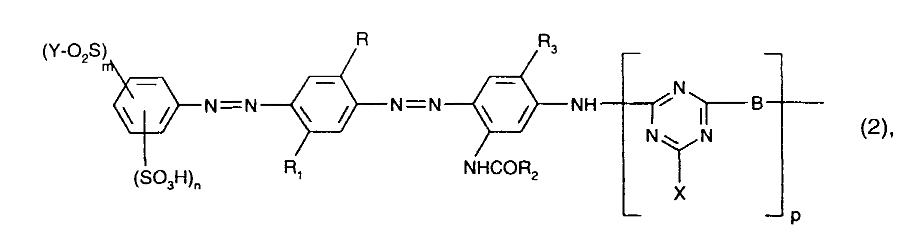 ist, worin R, R₁, R₂, R₃, X, m und n die oben angegebene Bedeutung haben, B der Rest eines aliphatischen, aromatischen, araliphatischen oder cycloaliphatischen Diamins ist und p für die Zahl 0 oder 1 steht.

Aus Research Disclosure, Bd. 219, Nr. 026 (10.07.82) sind Farbstoffe bekannt, welche sich von den erfindungsgemässen Farbstoffen hinsichtlich des Disazochromophors und des Restes X unterscheiden.

Aus der EP-A-0 495 753, EP-A-0 458 743 sowie der EP-A-0 625 549 sind Farbstoffe bekannt, welche sich von den erfindungsgemässen Farbstoffen hinsichtlich des Disazochromophors unterscheiden.

In den Verbindungen der Formel (1) vorhandene Sulfogruppen können generell sowohl als freie Säure (-SO₃H) als auch in einer beliebigen Salzform, z.B. als Alkali-, Erdalkali- oder Ammoniumsalz oder als Salz eines organischen Amins wie etwa dem Natrium-, Kalium-, Lithium- oder Ammoniumsalz, dem Salz des Triethanolamins oder dem Mischsalz zweier oder mehrerer verschiedener Kationen, z.B. als Na/Li-, Na/NH₄- oder Na/Li/NH₄-Mischsalz, vorliegen.

C₁-C₄-Alkyl bedeutet generell Methyl, Ethyl, n- oder iso-Propyl oder n-, iso-, sec.- oder tert.-Butyl, vorzugsweise Methyl oder Ethyl und insbesondere bevorzugt Methyl. C₁-C₄-Alkoxy bedeutet generell Methoxy, Ethoxy, n- oder iso-Propoxy oder n-, iso-, sec.- oder tert.-Butoxy, vorzugsweise Methoxy oder Ethoxy und besonders bevorzugt Methoxy. Halogen steht generell z.B. für Fluor, Chlor oder Brom und vorzugsweise für Chlor oder Fluor.

Bedeutet Y einen Rest -CH₂-CH₂-U, so kann es sich bei der Abgangsgruppe U z.B. um -Cl,-Br, -F, -OSO₃H, -SSO₃H, -OCO-CH₃, OPO₃H₂, -OCO-C₆H₅, OSO₂-C₁-C₄-Alkyl oder -OSO₂-N(C₁-C₄-Alkyl)₂ handeln. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

Bedeutet m die Zahl 1, ist n bevorzugt 0. Bevorzugt steht m für die Zahl 0 und n für die Zahl 1 oder insbesondere 2.

Eine Gruppe von brauchbaren Verbindungen der Formel (1) stellen solche dar, worin R C₁-C₄-Alkyl, bevorzugt Methyl oder Ethyl und insbesondere bevorzugt Methyl ist.

Eine weitere Gruppe von brauchbaren Verbindungen der Formel (1) stellen solche dar, worin R C₁-C₄-Alkoxy, bevorzugt Methoxy oder Ethoxy und insbesondere bevorzugt Methoxy ist.

Eine dritte Gruppe von brauchbaren Verbindungen der Formel (1) stellen solche dar, worin R im Alkylteil durch Hydroxy, Methoxy, Ethoxy oder Sulfato substituiertes C₁-C₄-Alkoxy, bevorzugt im Alkylteil durch Hydroxy, Methoxy oder Sulfato substituiertes C₁-C₂-Alkoxy und insbesondere bevorzugt β-Hydroxyethoxy, β-Sulfatoethoxy oder β-Hydroxyethoxy ist.

R bedeutet bevorzugt Methyl, Ethyl, Methoxy, Ethoxy oder im Alkylteil durch Hydroxy, Methoxy oder Sulfato substituiertes C₁-C₂-Alkoxy. Besonders bevorzugte Bedeutungen von R sind Methyl, Methoxy, β-Hydroxyethoxy, β-Sulfatoethoxy oder β-Hydroxyethoxy.

R₂' steht vorzugsweise für Methyl, Ethyl oder -NH₂, besonders bevorzugt für Methyl oder Ethyl und insbesondere bevorzugt für Methyl.

R₁ bedeutet bevorzugt -NHCOCH₃, -NHCOC₂H₅ oder -NHCONH₂ und insbesondere bevorzugt -NHCOCH₃.

R₂ bedeutet bevorzugt Methyl, Ethyl oder -NH₂, besonders bevorzugt Methyl oder -NH₂ und insbesondere bevorzugt -NH₂.

R₃ bedeutet bevorzugt Wasserstoff, Methyl, Ethyl, Methoxy, Ethoxy oder Chlor, besonders bevorzugt Wasserstoff, Methyl, Methoxy oder Chlor und insbesondere bevorzugt Wasserstoff.

Bedeutet Z einen nicht-reaktiven Aminorest, so kann es sich z.B. um Amino; N-C₁-C₄-Alkylamino oder N,N-Di-C₁-C₄-Alkylamino, wobei das Alkyl jeweils z.B. durch Sulfo, Sulfato, Hydroxy, Carboxy oder Phenyl substituiert sein kann; Cyclohexylamino; Phenylamino oder Naphthylamino, wobei das Phenyl oder Naphthyl jeweils z.B. durch C₁-C₄-Alkyl, C₁-C₄-Alkoxy, Amino, C₂-C₄-Alkanoylamino, Carboxy, Sulfo oder Halogen substituiert sein kann; N-C₁-C₄-Alkyl-N-phenylamino, wobei das Alkyl und Phenyl gegebenenfalls wie zuvor geschildert substituiert sein kann, oder um Morpholino handeln.

Beispiele für geeignete nicht-reaktive Aminoreste Z sind Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, 2- oder 3-Sulfo-4-methoxyphenylamino, 2-oder 3-Sulfo-4-methylphenylamino, 4-Methyl-2,5-disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 4,8-Disulfo-2-naphthylamino, 4,6,8-Trisulfo-2-naphthylamino, 1,5,7-Trisulfo-2-naphthylamino, 3,6,8-Trisulfo-2-naphthylamino, 1,6-Disulfo-2-naphthylamino, N-Ethyl-N-phenylamino, N-Methyl-N-phenylamino, N-β-sulfoethyl-N-phenylamino, β-Hydroxyethyl-N-phenylamino und Morpholino.

Z steht als nicht-reaktiver Aminorest bevorzugt für Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino oder Naphthylamino, N-C₁-C₂-Alkyl-N-phenylamino oder für Morpholino und besonders bevorzugt für Amino, unsubstituiertes oder durch Sulfo substituiertes N-Mono- oder N,N-Di-C₁-C₂-Alkylamino, durch 1 bis 3 gleiche oder verschiedene Reste aus der Gruppe Methyl, Methoxy und Sulfo substituiertes Phenylamino oder für 1 bis 3 Sulfogruppen tragendes 1- oder 2-Naphthylamino.

Bedeutet Z einen Rest der zuvor angegebenen Formel (2), so gelten für die Variablen R, R₁, R₂, R₃, X, Y, n und m jeweils die zuvor angegebenen Bedeutungen und Bevorzugungen.

p bedeutet bevorzugt die Zahl 1.

Der Diaminorest B entspricht z.B. der Formel

-NR₄-B₁-NR₄', (3)

worin B₁ ein aliphatisches, cycloaliphatisches, aromatisches oder araliphatisches Brückenglied ist und R₄ und R₄' unabhängig voneinander je Wasserstoff oder gegebenenfalls durch Hydroxy, C₁-C₄-Alkoxy oder Sulfato substituiertes C₁-C₄-Alkyl bedeuten.

R₄ und R₄' stehen unabhängig voneinander je bevorzugt für Wasserstoff, Methyl oder Ethyl und besonders bevorzugt je für Wasserstoff.

Bedeutet B₁ ein aliphatisches Brückenglied,kann es sich z.B. um geradkettiges oder verzweigtes und gegebenenfalls durch Hydroxy, Sulfo oder Sulfato substituiertes oder durch -O-, -NH- oder -N(CH₃)- unterbrochenes C₂-C₁₂-Alkylen handeln. Beispiele sind 1,2-Ethylen, 1-Methyl-1,2-Ethylen, 1,1-Dimethyl-1,2-ethylen, 1,2-Dimethyl-1,2-ethylen, 1,1,2,2-Tetramethyl-1,2-ethylen, 1,3-Propylen, 2,2-Dimethyl-1,3-propylen, 2-Hydroxy-1,3-propylen, 1,4-Butylen, 1,6-Hexylen, 2-Methyl-1,5-pentylen, -CH₂CH₂-O-CH₂CH₂-O-CH₂CH₂-, -(CH₂)₃-O-(CH₂)₃-O-(CH₂)₃- oder -CH₂CH₂-NH-CH₂CH₂-.

B₁ steht bevorzugt für geradkettiges oder verzweigtes C₂-C₆-Alkylen, welches gegebenenfalls durch Hydroxy substituiert ist, und besonders bevorzugt für geradkettiges oder verzweigtes C₂-C₆-Alkylen. Beispiele für insbesondere bevorzugte Alkylenreste B₁ sind 1,2-Ethylen, 1-Methyl-1,2-ethylen, 1,3-Propylen, 2-Methyl-1,5-pentylen und 1,6-Hexylen.

Steht B₁ für ein cycloaliphatisches Brückenglied, handelt es sich z.B. um 1,2-, 1,3- oder 1,4-Cyclohexylen, den Rest der Formel 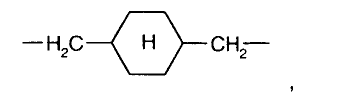 oder B₁ bildet zusammen mit -NR₄- und -NR₄'- einen Piperazinring.

Beispiele für aromatische Brückenglieder B₁ sind unsubstituiertes oder z.B. durch Sulfo, Methyl, Methoxy oder Chlor substituiertes 1,2-, 1,3- oder 1,4-Phenylen, gegebenenfalls durch Sulfo substituiertes Naphthylen oder ein Rest der Formel 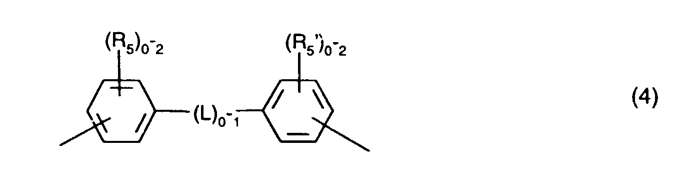 worin L z.B. die Bedeutung -CO-, -NHCO-, -NHCONH-, -(CH₂)₁₋₄-, -NH-, -CH=CH-, -O- , -SO₂- oder -N=N- hat und (R₅)₀₋₂ und (R₅')₀₋₂ unabhängig voneinander jeweils für 0 bis 2 gleiche oder verschiedene Reste aus der Gruppe Sulfo, Methyl, Methoxy und Chlor stehen.

Bevorzugt als aromatisches Brückenglied B₁ sind unsubstituiertes oder durch Sulfo, Methyl oder Methoxy substituiertes 1,3- oder 1,4-Phenylen, durch 1 oder 2 Sulfogruppen substituiertes Naphthylen oder ein Rest der Formel 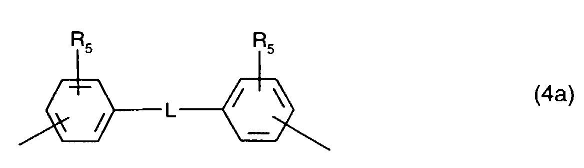 oder 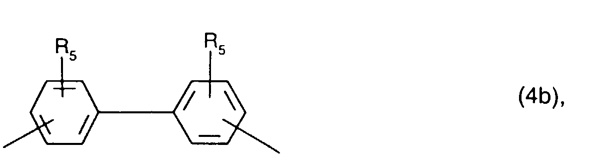 worin L -NHCONH-, -O-, -NH-, -CH=CH- oder -CH₂- und R₅ Wasserstoff oder Sulfo bedeuten.

Beispiele für besonders bevorzugte aromatische Brückenglieder B₁ sind 1,3-Phenylen, 1,4-Phenylen, 4-Methylphenylen-1,3, 4-Sulfophenylen-1,3, 3-Sulfophenylen-1,4, 3,6-Disutfophenylen-1,4, 4,6-Disulfophenylen-1,3, 3,7-Disulfonaphthylen-1,5, 4,8-Disulfonaphthylen-2,6, 2,2'-Disulfodiphenylen-4,4', 4,4'-Phenylenhamstoff-2,2'-disulfonsäure und 2,2'-Disulfostilbenylen-4,4'.

Bedeutet B₁ ein araliphatisches Brückenglied, handelt es sich z.B. um gegebenenfalls durch Sulfo substituiertes Benzylen, Methoxyphenylen oder Dimethylen-1,2-, -1,3- oder -1,4-phenylen.

Eine bevorzugte Ausführungsform der vorliegenden Erfindung betrifft Verbindungen der Formel 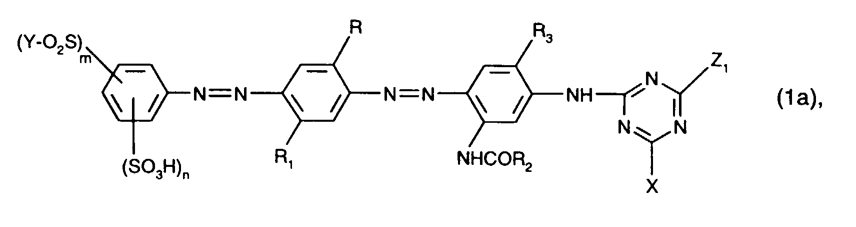 worin für R, R₁, R₂, R₃, X, Y, n und m jeweils die zuvor angegebenen Bedeutungen und Bevorzugungen gelten, und für Z₁ die zuvor für Z als nicht-reaktiver Aminorest angegebenen Bedeutungen und Bevorzugungen gelten. Hierbei sind die Verbindungen der Formel (1a) besonders bevorzugt, worin R Methyl, Methoxy, β-Hydroxyethoxy, β-Sulfatoethoxy oder β-Hydroxyethoxy, R₁ einen Rest -NHCOR₂', R₂ und R₂' unabhängig voneinander je Methyl oder -NH₂, R₃ Wasserstoff, Methyl, Methoxy oder Chlor, X Fluor, m die Zahl 0, n die Zahl 1 oder 2 und Z₁ Amino, unsubstituiertes oder durch Sulfo substituiertes N-Mono- oder N,N-Di-C₁-C₂-Alkylamino, durch 1 bis 3 gleiche oder verschiedene Reste aus der Gruppe Methyl, Methoxy und Sulfo substituiertes Phenylamino oder 1 bis 3 Sulfogruppen tragendes 1- oder 2-Naphthylamino bedeuten.

Eine weitere bevorzugte Ausführungsform der vorliegenden Erfindung betrifft Verbindungen der Formel 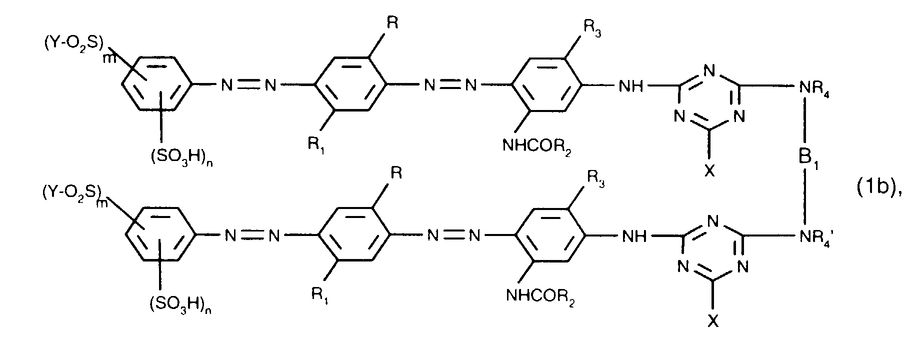 worin für B₁, R, R₁, R₂, R₃, R₄, R₄', X, Y, n und m jeweils die zuvor genannten Bedeutungen und Bevorzugungen gelten. Hierbei sind die Verbindungen der Formel (1b) besonders bevorzugt, worin R Methyl, Methoxy, β-Hydroxyethoxy, β-Sulfatoethoxy oder β-Hydroxyethoxy, R₁ einen Rest -NHCOR₂', R₂ und R₂' unabhängig voneinander je Methyl oder -NH₂, R₃ Wasserstoff, Methyl, Methoxy oder Chlor, R₄ und R₄' je Wasserstoff, X Fluor, m die Zahl 0, n die Zahl 1 oder 2 und B₁ geradkettiges oder verzweigtes C₂-C₆-Alkylen, welches gegebenenfalls durch Hydroxy substituiert ist, bedeuten.

Eine weitere bevorzugte Ausführungsform der vorliegenden Erfindung betrifft Verbindungen der Formel 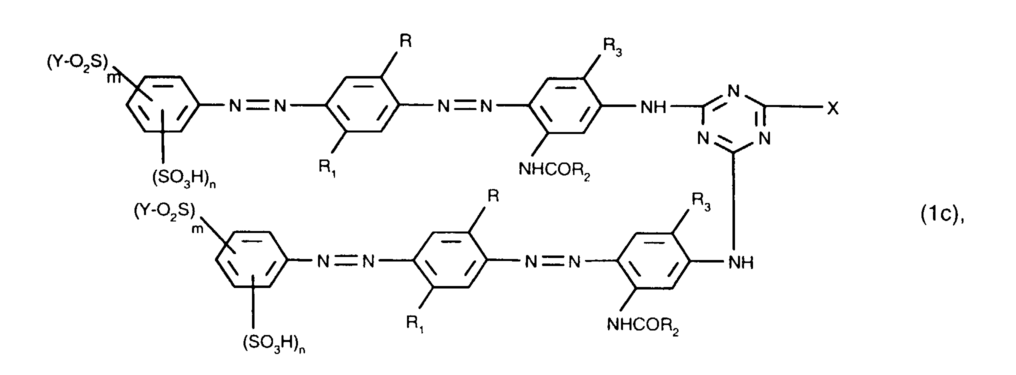 worin für R, R₁, R₂, R₃, X, Y, n und m jeweils die zuvor genannten Bedeutungen und Bevorzugungen gelten. Hierbei sind die Verbindungen der Formel (1c) besonders bevorzugt, worin R Methyl, Methoxy, β-Hydroxyethoxy, β-Sulfatoethoxy oder β-Hydroxyethoxy, R₁ einen Rest -NHCOR₂', R₂ und R₂' unabhängig voneinander je Methyl oder -NH₂, R₃ Wasserstoff, Methyl, Methoxy oder Chlor, X Fluor, m die Zahl 0 und n die Zahl 1 oder 2 bedeuten.

Die Herstellung der Verbindungen der Formel (1) und insbesondere (1a) ist dadurch gekennzeichnet, dass man eine Aminodisazoverbindung der Formel 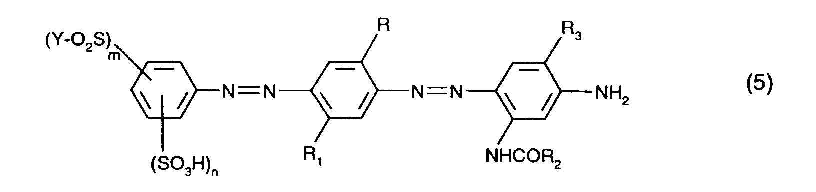 mit einem Triazin der Formel 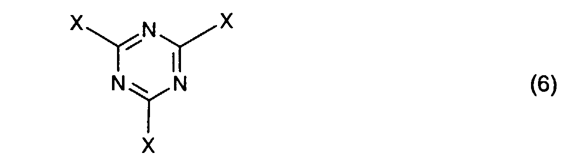 und einem Amin der Formel

H - Z (7)

in beliebiger Reihenfolge miteinander kondensiert, wobei R, R₁, R₂, R₃, X, Y, Z, n und m jeweils die zuvor angegebene Bedeutung haben.

Die Verbindungen der Formel (1b) werden vorteilhaft hergestellt, indem man ca. 1 Moläquivalent Verbindung der oben angegebenen Formel (5) mit in etwa 1 Moläquivalent Trifluortriazin der oben angegebenen Formel (6) kondensiert und die erhaltene Difluortriazinylverbindung anschliessend mit in etwa 0,5 Moläquivalenten eines Diamins der Formel

H-B-H (8),

worin B die zuvor angegebene Bedeutung hat, umsetzt. Alternativ kann auch 1 Moläquivalent des Diamins der Formel (8) zunächst mit ca. 2 Moläquivalenten Trifluortriazin der Formel (6) und dann mit ca. 2 Moläquivalenten Aminodisazoverbindung der Formel (5) kondensiert werden.

Die Verbindungen der Formel (1c) werden vorteilhaft hergestellt, indem man ca. 2 Moläquivalente der Aminodisazoverbindung der oben angegebenen Formel (5) mit in etwa 1 Moläquivalent Trifluortriazin der oben angegebenen Formel (6) kondensiert.

Die Herstellung der Aminodisazoverbindungen der Formel (5) ist an sich bekannt oder wird in Analogie zu bekannten Verfahren durch geeignete Diazotierungs- und Kupplungsschritte ausgeführt. Die Diazotierung der Diazokomponenten erfolgt dabei in der Regel durch Einwirkung von salpetriger Säure in wässrig-mineralsaurer Lösung bei tiefen Temperaturen, z.B. mit Nitriten wie Natriumnitrit in salzsaurer Lösung bei Temperaturen von 0-5°C, die Kupplung auf die Kupplungskomponenten bei schwach sauren, neutralen oder schwach alkalischen pH-Werten, z.B. bei pH 3 bis 10.

Die Kondensation der Trifluortriazine der Formel (6) mit den Aminoverbindungen der Formel (5), (7) oder (8) erfolgt vorzugsweise in wässriger Lösung oder Suspension bei niedrigen Temperaturen von z.B. 0 bis 30°C und einem schwach sauren, neutralen oder schwach alkalischen pH-Wert, sodass im fertigen Reaktivfarbstoff der Formel (1) noch ein abspaltbares Halogenatom übrig bleibt. Vorteilhaft wird der bei der Kondensation freiwerdende Halogenwasserstoff laufend durch Zugabe wässriger Alkalihydroxide, -carbonate oder -bicarbonate neutralisiert.

Die Verbindungen der Formel (1) eignen sich als Reaktivfarbstoffe zum Färben oder Bedrucken der verschiedensten Materialien, insbesondere von hydroxylgruppenhaltigen oder stickstoffhaltigen Fasermaterialien. Beispiele für stickstoffhaltige Fasermaterialien sind Seide, Wolle, synthetische Polyamidfasermaterialien, Polyurethane sowie diese enthaltende Mischgewebe. Beispiele für hydroxylgruppenhaltige Fasermaterialien sind natürliche Fasermaterialien, z.B. Leinen, Hanf, Jute oder insbesondere Baumwolle, Zellstoff, regenerierte Cellulose sowie diese enthaltende Mischgewebe. Die erfindungsgemässen Farbstoffe sind insbesondere für das Färben oder Bedrucken von Baumwolle sowie von baumwollehaltigen Mischgeweben, z.B. Baumwolle/Polyester- oder Baumwolle/Polyamid-Mischgeweben, geeignet.

Die erfindungsgemässen Verbindungen der Formel (1) sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe lassen sich auf verschiedene Weise auf der Faser fixieren, insbesondere in Form von wässrigen Farbstofflösungen oder -druckpasten. Sie eignen sich sowohl für das Ausziehverfahren als auch für das Färben nach einem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern wie z.B. Wolle, Seide oder Seide und Wolle enthaltende Mischgewebe. Flüssige Formulierungen der Verbindungen der Formel (1) und diese enthaltende Druckpasten zeichnen sich durch eine gute Lagerstabilität aus.

Die mit den erfindungsgemässen Verbindungen der Formel (1) hergestellten Färbungen und Drucke auf Cellulosematerialien besitzen eine hohe Farbstärke und eine hohe Faser-Farbstoff-Bindungsstabilität, sowohl im sauren als auch im alkalischen Bereich, weiterhin eine gute Lichtechtheit und sehr gute Nassechtheiten, z.B. Wasch-, Wasser-, Seewasser-, Ueberfärbe- und Schweissechtheit, sowie eine gute Plissierechtheit, Bügelechtheit, Reibechtheit und Chlorechtheit.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis Kilogramm zu Liter.

### Beispiel 1:

60, 6 Teile der Aminodisazoverbindung der Formel 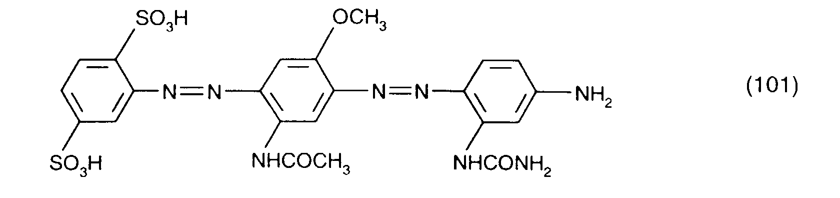 (Herstellung in üblicher Weise durch Diazotierung der Verbindung der Formel 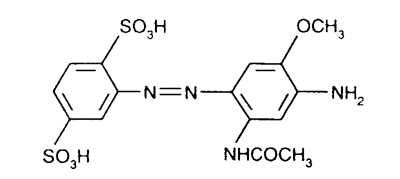 und Kupplung auf 3-Ureidoanilin) werden in 600 Teilen Wasser neutral gelöst und nach Zugabe von 150 Teilen Eis bei 0°C und pH 7 mit 14,5 Teilen Cyanurfluorid monokondensiert. Die erhaltene Difluortriazinylverbindung wird anschliessend bei einer Temperatur von ca. 25°C und pH 9 mit 12,5 Teilen Taurin kondensiert. Nach dem Eindampfen wird die Verbindung der Formel 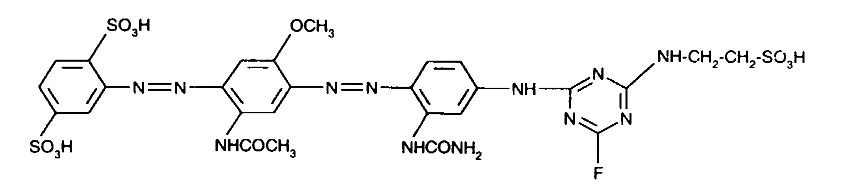 erhalten, welche Baumwolle in einer braunen Nuance mit guten Allgemeinechtheiten färbt.

### Beispiele 2 bis 5: Analog wie im Beispiel 1 beschrieben lassen sich die folgenden Verbindungen herstellen.

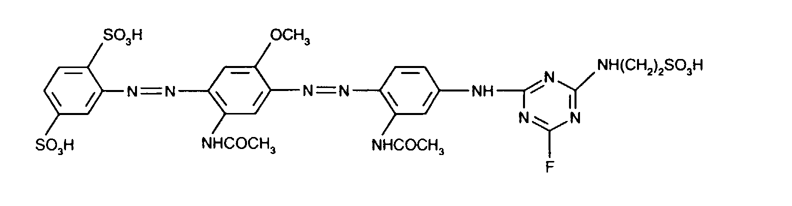

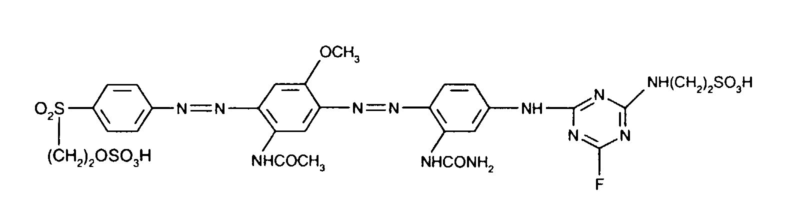

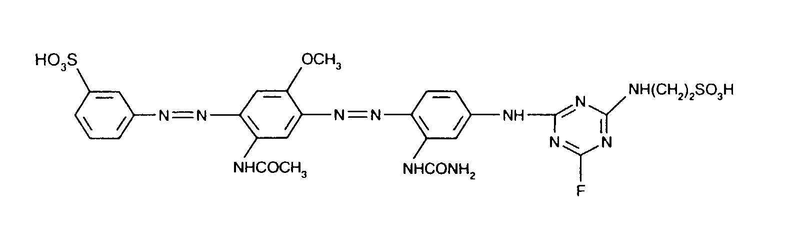

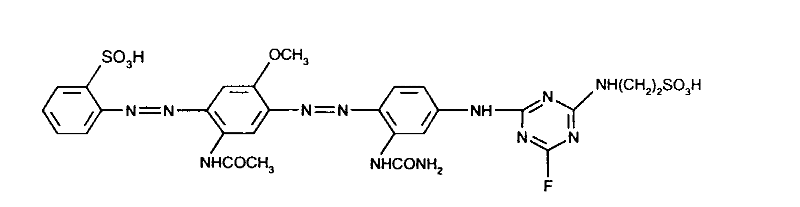

Beispiel 6: 60,6 Teile der Aminodisazoverbindung der Formel (101) gemäss Beispiel 1 werden in 600 Teilen Wasser neutral gelöst und nach Zugabe von 150 Teilen Eis bei 0°C und pH 7 mit 14,5 Teilen Cyanurfluorid monokondensiert. Die erhaltene Difluortriazinylverbindung wird anschliessend bei einer Temperatur von ca. 25°C und pH 9 mit 3,7 Teilen 1,2-Propylendiamin kondensiert. Nach dem Eindampfen wird die Verbindung der Formel 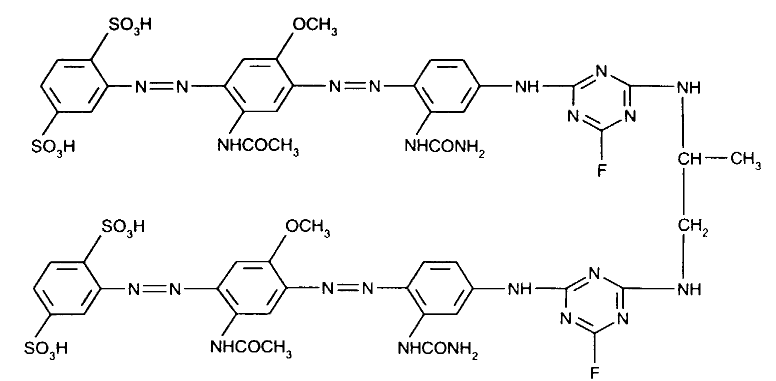 erhalten, welche Baumwolle in einer braunen Nuance mit guten Allgemeinechtheiten färbt.

Färbevorschrift I: 2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II: 2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III: 8 Teile des gemäss Beispiel 6 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV: 4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V: 6 Teile des gemäss Beispiel 6 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI: 2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII: 0,1 Teile Farbstoff gemäss Beispiel 6 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine braune Färbung erhalten, die sehr gute Licht- und Nassechtheiten aufweist.

Druckvorschrift I: 3 Teile des gemäss Beispiel 1 erhaltenen Reaktivfarbstoffes werden unter schnellem Rühren in 100 Teile einer Stammverdickung, enthaltend 50 Teile 5%ige Natriumalginat-Verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 6 erhaltenen Reaktivfarbstoffes werden unter schnellem Rühren in 100 Teile einer Stammverdickung, enthaltend 50 Teile 5%ige Natriumalginat-Verdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 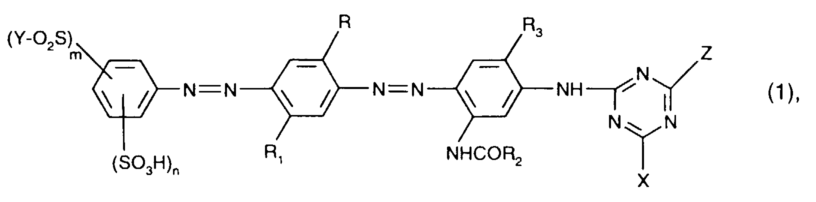 worin R C₁-C₄-Alkyl oder unsubstituiertes oder im Alkylteil durch Hydroxy, C₁-C₄-Alkoxy oder Sulfato substituiertes C₁₋C₄-Alkoxy bedeutet, R₁ eine Gruppe -NHCOR₂' ist, R₂ und R₂' unabhängig voneinander je C₁-C₄-Alkyl oder -NH₂ bedeuten, R₃ Wasserstoff, C₁₋C₄-Alkyl, C₁-C₄-Alkoxy oder Halogen ist, X für Fluor steht, Y Vinyl oder einen Rest -CH₂-CH₂-U bedeutet und U für eine Abgangsgruppe steht, m die Zahl 0 oder 1 und n eine Zahl von 0 bis 2 bedeuten, wobei die Summe (n+m) ≥ 1 beträgt, und Z ein nicht-reaktiver Aminorest oder ein Rest der Formel 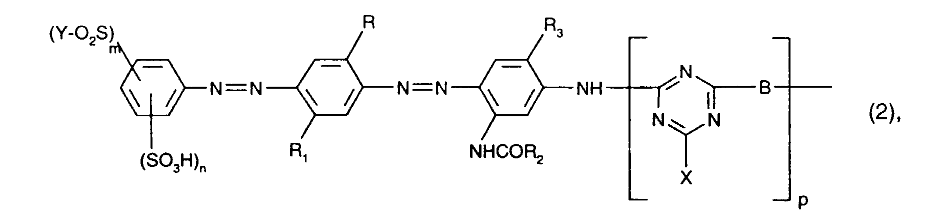 ist, worin R, R₁, R₂, R₃, X, n und m die oben angegebene Bedeutung haben, B der Rest eines aliphatischen, aromatischen, araliphatischen oder cycloaliphatischen Diamins ist und p für die Zahl 0 oder 1 steht.

2. Verbindungen gemäss Anspruch 1, dadurch gekennzeichnet, dass m die Zahl 0 bedeutet.

3. Verbindungen gemäss Anspruch 1 oder 2, dadurch gekennzeichnet, dass R Methyl, Ethyl, Methoxy, Ethoxy oder im Alkylteil durch Hydroxy, Methoxy oder Sulfato substituiertes C₁-C₂-Alkoxy bedeutet.

4. Verbindungen gemäss einem der Ansprüche 1 bis 3, dadurch gekennzeichnet, dass R₁ -NHCOCH₃, -NHCOC₂H₅ oder -NHCONH₂ bedeutet.

5. Verbindungen gemäss einem der Ansprüche 1 bis 4, dadurch gekennzeichnet, dass R₂ Methyl oder -NH₂ bedeutet.

6. Verbindungen gemäss einem der Ansprüche 1 bis 5, dadurch gekennzeichnet, dass R₃ Wasserstoff, Methyl, Methoxy oder Chlor bedeutet.

7. Verbindungen gemäss einem der Ansprüche 1 bis 6, dadurch gekennzeichnet, dass Z einen nicht-reaktiven Aminorest aus der Gruppe Amino; N-C₁-C₄-Alkylamino oder N,N-Di-C₁-C₄-Alkylamino, wobei das Alkyl jeweils unsubstituiert oder durch Sulfo, Sulfato, Hydroxy, Carboxy oder Phenyl substituiert ist; Cyclohexylamino; Phenylamino oder Naphthylamino, wobei das Phenyl oder Naphthyl jeweils unsubstituiert oder durch C₁-C₄-Alkyl, C₁-C₄-Alkoxy, Amino, C₂-C₄-Alkanoylamino, Carboxy, Sulfo oder Halogen substituiert ist; N-C₁-C₄-Alkyl-N-phenylamino, wobei das Alkyl und Phenyl unsubstituiert oder wie oben beschrieben substituiert ist; und Morpholino bedeutet.

8. Verbindungen gemäss Anspruch 7, dadurch gekennzeichnet, dass Z Amino, unsubstituiertes oder durch Sulfo substituiertes N-Mono- oder N,N-Di-C₁-C₂-Alkylamino, durch 1 bis 3 gleiche oder verschiedene Reste aus der Gruppe Methyl, Methoxy und Sulfo substituiertes Phenylamino oder 1 bis 3 Sulfogruppen tragendes 1- oder 2-Naphthylamino bedeutet.

9. Verbindungen gemäss einem der Ansprüche 1 bis 6, dadurch gekennzeichnet, dass Z einem Rest der im Anspruch 1 angegebenen Formel (2) entspricht, worin p die Zahl 1 und B ein Diaminorest der Formel
-NR₄-B₁-NR₄' (3),
worin B₁ ein aliphatisches, cycloaliphatisches, aromatisches oder araliphatisches Brückenglied ist und R₄ und R₄' unabhängig voneinander je Wasserstoff oder gegebenenfalls durch Hydroxy, C₁-C₄-Alkoxy oder Sulfato substituiertes C₁-C₄-Alkyl bedeuten, sind.

10. Verbindungen gemäss Anspruch 9, dadurch gekennzeichnet, dass B₁ geradkettiges oder verzweigtes gegebenenfalls durch Hydroxy, Sulfo oder Sulfato substituiertes oder durch -O-, -NH- oder -N(CH₃)- unterbrochenes C₂-C₁₂-Alkylen bedeutet.

11. Verbindungen gemäss Anspruch 9 oder 10, dadurch gekennzeichnet, dass B₁ geradkettiges oder verzweigtes C₂-C₆-Alkylen bedeutet.

12. Verbindungen gemäss Anspruch 1 der Formel 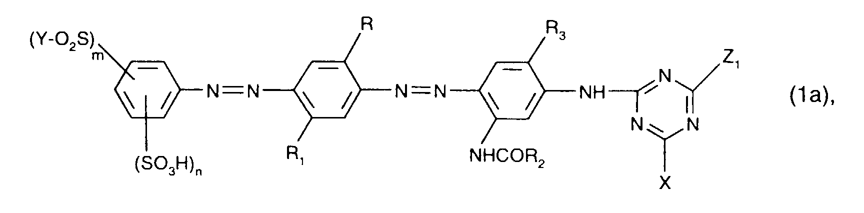 worin R Methyl, Methoxy, β-Hydroxyethoxy, β-Sulfatoethoxy oder β-Hydroxyethoxy, R₁ einen Rest -NHCOR₂', R₂ und R₂' unabhängig voneinander je Methyl oder -NH₂, R₃ Wasserstoff, Methyl, Methoxy oder Chlor, X Fluor, m die Zahl 0, n die Zahl 1 oder 2 und Z₁ Amino, unsubstituiertes oder durch Sulfo substituiertes N-Mono- oder N,N-Di-C₁-C₂-Alkylamino, durch 1 bis 3 gleiche oder verschiedene Reste aus der Gruppe Methyl, Methoxy und Sulfo substituiertes Phenylamino oder 1 bis 3 Sulfogruppen tragendes 1- oder 2-Naphthylamino bedeuten.

13. Verbindungen gemäss Anspruch 1 der Formel 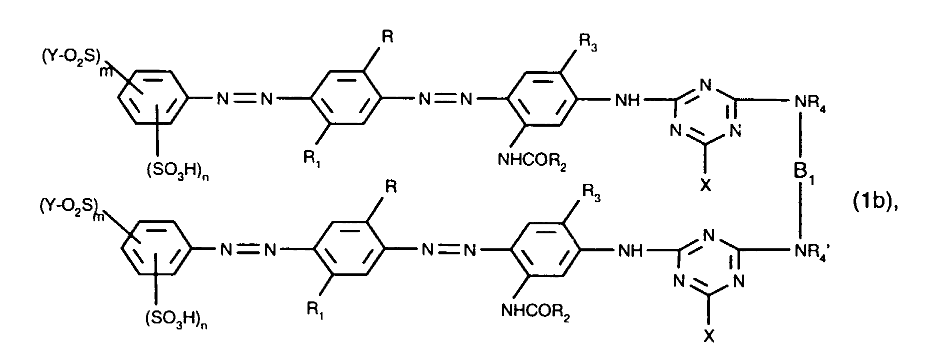 worin R Methyl, Methoxy, β-Hydroxyethoxy, β-Sulfatoethoxy oder β-Hydroxyethoxy, R₁ einen Rest -NHCOR₂', R₂ und R₂' unabhängig voneinander je Methyl oder -NH₂, R₃ Wasserstoff, Methyl, Methoxy oder Chlor, R₄ und R₄' je Wasserstoff, X Fluor, m die Zahl 0, n die Zahl 1 oder 2 und B₁ geradkettiges oder verzweigtes C₂-C₆-Alkylen, welches gegebenenfalls durch Hydroxy substituiert ist, bedeuten.

14. Verfahren zur Herstellung von Verbindungen der Formel (1) gemäss Anspruch 1, dadurch gekennzeichnet, dass man eine Aminodisazoverbindung der Formel 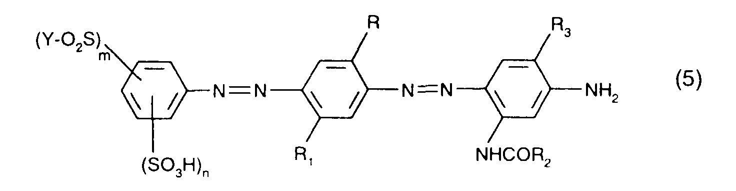 mit einem Triazin der Formel 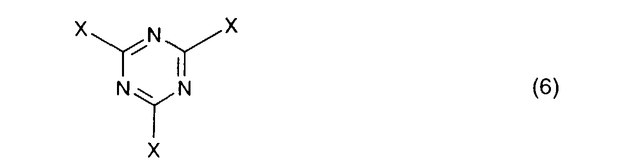 und einem Amin der Formel
H-Z (7)
in beliebiger Reihenfolge miteinander kondensiert, wobei R, R₁, R₂, R₃, X, Y, Z, n und m jeweils die im Anspruch 1 angegebene Bedeutung haben.

15. Verwendung von Verbindungen der Formel (1) als Reaktivfarbstoffe zum Färben oder Bedrucken von hydroxylgruppenhaltigen oder stickstoffhaltigen Fasermaterialien.

16. Verwendung gemäss Anspruch 15, dadurch gekennzeichnet, dass man cellulosehaltige Fasermaterialien, insbesondere baumwollhaltige Fasermaterialien, färbt oder bedruckt.

## Claims

1. A compound of formula 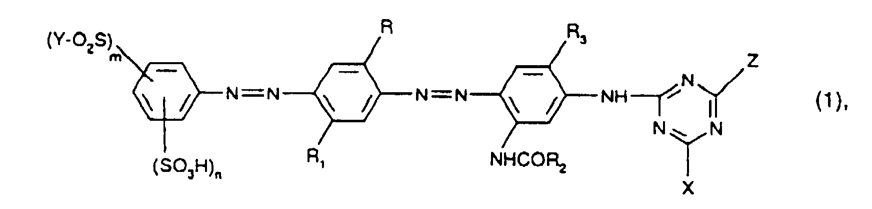 wherein R is C₁-C₄alkyl or is C₁-C₄alkoxy which is unsubstituted or substituted in the alkyl moiety by hydroxy, C₁-C₄alkoxy or sulfato, R₁ is a -NHCOR₂' group, R₂ and R₂' are each independently of the other C₁-C₄alkyl or -NH₂, R₃ is hydrogen, C₁-C₄alkyl, C₁-C₄alkoxy or halogen, X is fluoro, Y is vinyl or a -CH₂-CH₂-U radical and U is a leaving group, m is 0 or 1, and n is a number from 0 to 2, the sum of (n+m) being ≥ 1, and Z is a non-reactive amino radical or a radical of formula 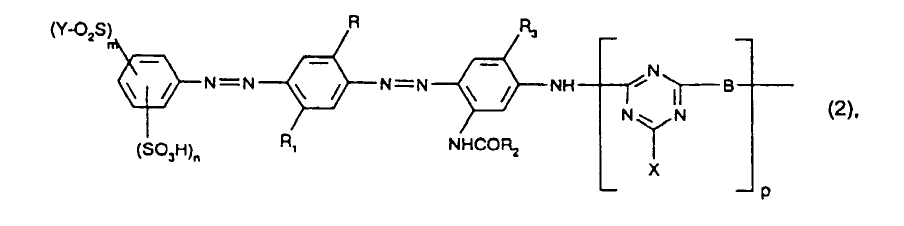 wherein R, R₁, R₂, R₃, X, m and n have the meaning given above, B is the radical of an aliphatic, aromatic, araliphatic or cycloaliphatic diamine, and p is 0 or 1.

2. A compound according to claim 1, wherein m is 0.

3. A compound according to claim 1 or 2, wherein R is methyl, ethyl, methoxy or ethoxy or is C₁-C₂alkoxy which is substituted in the alkyl moiety by hydroxy, methoxy or sulfato.

4. A compound according to one of claims 1 to 3, wherein R₁ is -NHCOCH₃, -NHCOC₂H₅ or -NHCONH₂.

5. A compound according to one of claims 1 to 4, wherein R₂ is methyl or-NH₂.

6. A compound according to one of claims 1 to 5, wherein R₃ is hydrogen, methyl, methoxy or chloro.

7. A compound according to one of claims 1 to 6, wherein Z is a non-reactive amino radical selected from the group consisting of amino; N-C₁-C₄alkylamino or N,N-di-C₁-C₄alkylamino, wherein alkyl is in each case unsubstituted or substituted by sulfo, sulfato, hydroxy, carboxy or phenyl; cyclohexylamino; phenylamino or naphthylamino, wherein phenyl or naphthyl is in each case unsubstituted or substituted by C₁-C₄alkyl, C₁-C₄alkoxy, amino, C₂-C₄alkanoylamino, carboxy, sulfo or halogen; N-C₁-C₄alkyl-N-phenylamino, wherein alkyl and phenyl is each unsubstituted or substituted as described above; and morpholino.

8. A compound according to claim 7, wherein Z is amino, unsubstituted or sulfo-substituted N-mono- or N,N-di-C₁-C₂alkylamino, phenylamino which is substituted by 1 to 3 identical or different radicals selected from the group consisting of methyl, methoxy and sulfo, or 1- or 2-naphthylamino carrying 1 to 3 sulfo groups.

9. A compound according to one of claims 1 to 6, wherein Z corresponds to a radical of formula (2) as set forth in claim 1, wherein p is 1 and B is a diamino radical of formula
-NR₄-B₁-NR₄' (3),
wherein B₁ is an aliphatic, cycloaliphatic, aromatic or araliphatic linking group, and R₄ and R₄' are each independently of the other hydrogen or C₁-C₄alkyl which is unsubstituted or substituted by hydroxy, C₁-C₄alkoxy or sulfato.

10. A compound according to claim 9, wherein B₁ is straight-chain or branched C₂-C₁₂alkylene which is unsubstituted or substituted by hydroxy, sulfo or sulfato or which is interrupted by -O-, -NH- or -N(CH₃)-.

11. A compound according to claim 9 or 10, wherein B₁ is straight-chain or branched C₂-C₆alkylene.

12. A compound according to claim 1 of formula 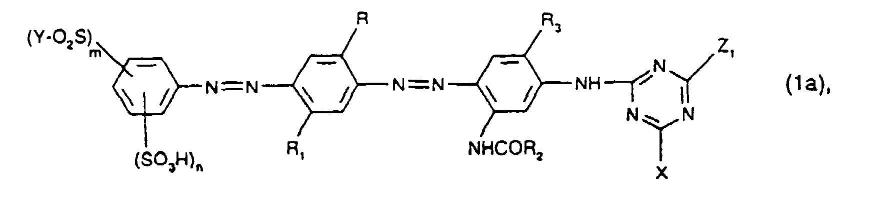 wherein R is methyl, methoxy, β-hydroxyethoxy, β-sulfatoethoxy or β-hydroxyethoxy, R₁ is a -NHCOR₂' radical, R₂ and R₂' are each independently of the other methyl or -NH₂, R₃ is hydrogen, methyl, methoxy or chloro, X is fluoro, m is 0, n is 1 or 2, and Z₁ is amino, unsubstituted or sulfo-substituted N-mono- or N,N-di-C₁-C₂alkylamino, phenylamino which is substituted by 1 to 3 identical or different radicals selected from the group consisting of methyl, methoxy and sulfo, or 1- or 2-naphthylamino carrying 1 to 3 sulfo groups.

13. A compound according to claim 1 of formula 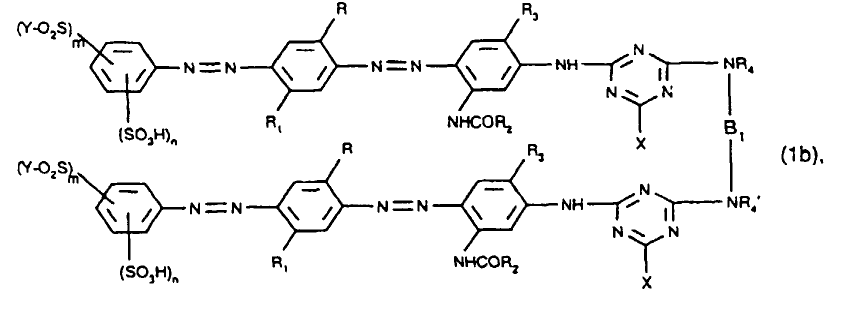 wherein R is methyl, methoxy, β-hydroxyethoxy, β-sulfatoethoxy or β-hydroxyethoxy, R₁ is a -NHCOR₂' radical, R₂ and R₂' are each independently of the other methyl or -NH₂, R₃ is hydrogen, methyl, methoxy or chloro, R₄ and R₄' are each hydrogen, X is fluoro, m is 0, n is 1 or 2, and B₁ is straight-chain or branched C₂-C₆alkylene which is unsubstituted or hydroxy-substituted.

14. A process for the preparation of a compound of formula (1) according to claim 1, which comprises condensing an aminodisazo compound of formula 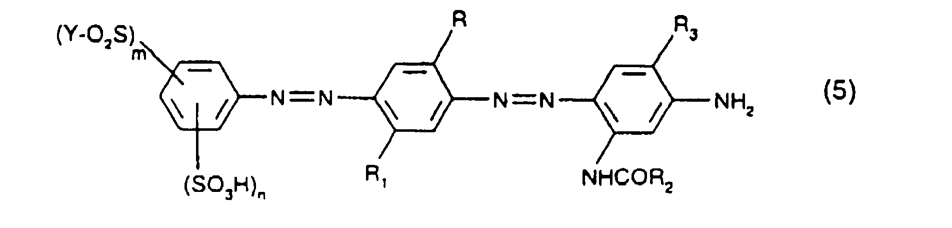 with a triazine of formula 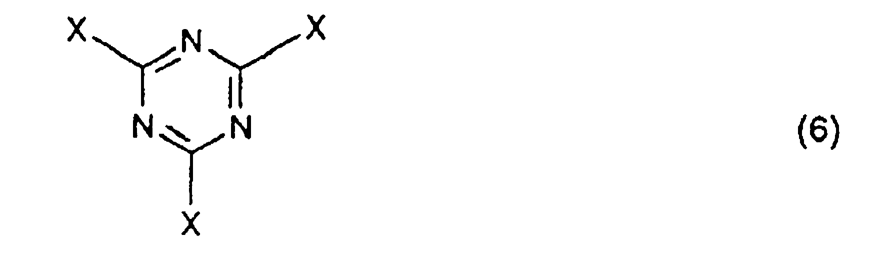 and an amine of formula
H - Z (7)
in any order, R, R₁, R₂, R₃, X, Y, Z, m and n each having the meaning given in claim 1.

15. Use of a compound of formula (1) as a reactive dye for dyeing or printing hydroxyl group-containing or nitrogen-containing fibre materials.

16. Use according to claim 15, which comprises dyeing or printing cellulosic fibre materials, in particular cotton-containing fibre materials.

## Revendications

1. Composés de formule 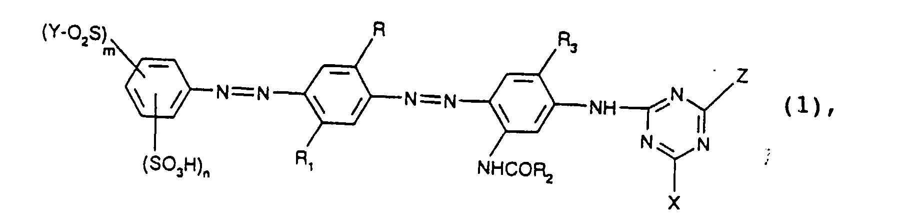 dans laquelle R représente un groupe alkyle en C₁-C₄ ou alkoxy en C₁-C₄ non substitué ou substitué dans le fragment alkyle par des groupes hydroxy, alkoxy en C₁-C₄ ou sulfato, R₁ représente un groupe -NHCOR₂, R₂ et R₂ représentent chacun indépendamment l'un de l'autre un groupe alkyle en C₁-C₄ ou -NH₂, R₃ représente un atome d'hydrogène, des groupes alkyle en C₁-C₄, alkoxy en C₁-C₄ ou un atome d'halogène, X représente un atome de fluor, Y représente un groupe vinyle ou un reste de formule -CH₂-CH₂-U et U représente un groupe partant, m vaut 0 ou 1, et n va de 0 à 2, la somme (n+m)≥1 et Z représente un reste amino non réactif ou un reste de formule 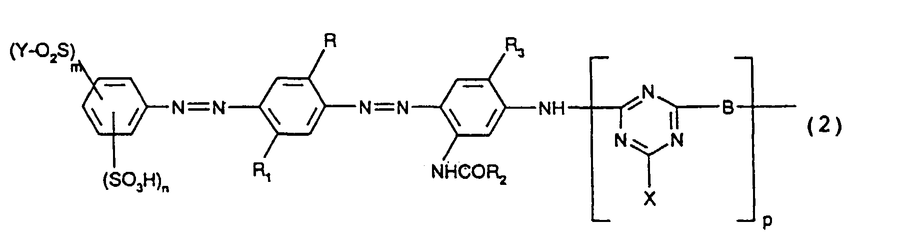 dans laquelle R, R₁, R₂, R₃, X, n et m possèdent les significations données ci-dessus, B représente le reste d'une diamine aliphatique, aromatique, araliphatique ou cycloaliphatique et p vaut 0 ou 1.

2. Composés selon la revendication 1, caractérisés en ce que m vaut 0.

3. Composés selon la revendication 1 ou 2, caractérisés en ce que R représente les groupes méthyle, éthyle, méthoxy, éthoxy ou alkoxy en en C₁-C₂ substitué dans le fragment alkyle par des groupes hydroxy, méthoxy ou sulfato.

4. Composés selon l'une des revendications 1 à 3, caractérisés en ce que R₁ représente les groupes -NHCOCH₃, -NHCOC₂H₅ ou -NHCONH₂.

5. Composés selon l'une des revendications 1 à 4 caractérisés en ce que R₂ représente un groupe méthyle ou -NH₂.

6. Composés selon l'une des revendications 1 à 5, caractérisés en ce que R₃ représente un atome d'hydrogène, des groupes méthyle, méthoxy ou un atome de chlore.

7. Composés selon l'une des revendications 1 à 6, caractérisés en ce que Z représente un reste amino non réactif pris dans le groupe comportant les groupes amino ; N-(alkyl en C₁-C₄)amino ou N,N-di-(alkyl en C₁-C₄)amino, alkyle pouvant être à chaque fois non substitué ou substitué par exemple par des groupes sulfo, sulfato, hydroxy, carboxy ou phényle ; cyclohexylamino ; phénylamino ou naphtylamino, phényle ou naphtyle pouvant être substitués à chaque fois par exemple par des groupes alkyle en C₁-C₄, alkoxy en C₁-C₄, amino, (alcanoyl en C₂-C₄)amino, carboxy, sulfo ou halogène ; N-(alkyl en C₁-C₄)-N-phénylamino, alkyle et phényle pouvant être éventuellement substitués comme décrit auparavant ; et morpholino.

8. Composés selon la revendication 7, caractérisés en ce que Z représente des groupes amino, N-mono- ou N,N-di-(alkyl en C₁-C₂)-amino non substitué ou substitué par des groupes sulfo, phénylamino substitué par 1 à 3 restes identiques ou différents pris parmi les substituants méthyle, méthoxy et sulfo, ou représente 1- ou 2-naphtylamino portant 1 à 3 groupes sulfo.

9. Composés selon l'une des revendications 1 à 6, caractérisés en ce que Z correspond à un reste de formule (2) indiquée à la revendication 1, dans laquelle p vaut 1 et B représente un reste diamino de formule
-NR₄-B₁-NR₄' 3)
dans laquelle B₁ représente un élément de pont aliphatique, cycloaliphatique, aromatique ou araliphatique et R₄ et R₄ représentent chacun indépendamment l'un de l'autre des atomes d'hydrogène ou des groupes alkyle en C₁-C₄ éventuellement substitué par des groupes hydroxy, alkoxy en C₁-C₄ ou sulfato.

10. Composés selon la revendication 9, caractérisés en ce que B₁ représente un alkylène en C₂-C₁₂ à chaîne droite ou ramifiée éventuellement substitué par des groupes hydroxy, sulfo ou sulfato ou interrompu par des groupes -O-, -NH- ou -N(CH₃)-.

11. Composés selon la revendication 9 ou 10, caractérisés en ce que B₁ représente un alkylène en C₂-C₆ linéaire ou ramifié.

12. Composés selon la revendication 1 de formule 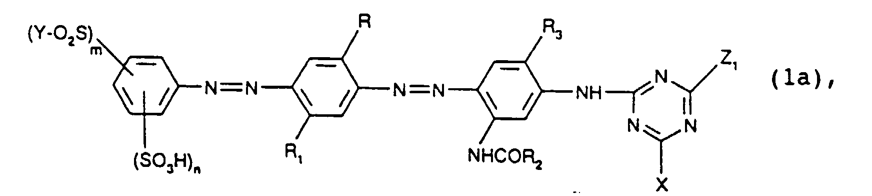 dans laquelle R représente des groupes méthyle, méthoxy, β-hydroxyéthoxy, β-sulfatoéthoxy ou β-hydroxyéthoxy, R₁ représente un reste de formule -NHCOR₂, R₂ et R₂ représentent chacun indépendamment l'un de l'autre des groupes méthyle ou -NH₂, R₃ représente un atome d'hydrogène, un groupe méthyle, un groupe méthoxy ou un atome de chlore, X représente un atome de fluor, m vaut 0, n vaut 1 ou 2 et Z₁ représente un groupe amino ou N-mono- ou N,N-di-(alkyl en C₁-C₂)amino non substitué ou substitué par des groupes sulfo, phénylamino substitué par 1 à 3 restes identiques ou différents pris dans le groupe des restes méthyle, méthoxy et sulfo ou 1- ou 2-naphtylamino portant 1 à 3 groupes sulfo.

13. Composés selon la revendication 1 de formule 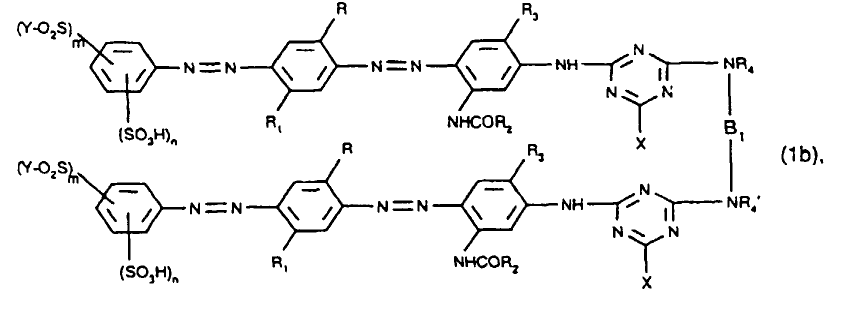 dans laquelle R représente des groupes méthyle, méthoxy, β-hydroxyéthoxy, β-sulfatoéthoxy ou β-hydroxyéthoxy, R₁ représente un reste de formule -NHCOR₂, R₂ et R₂ représentent chacun indépendamment l'un de l'autre des groupes méthyle ou -NH₂, R₃ représente un atome d'hydrogène, un groupe méthyle, un groupe méthoxy ou un atome de chlore, R₄ et R₄ représentent chacun un atome d'hydrogène, X représente un atome de fluor, m vaut 0, n vaut 1 ou 2 et B₁ représente un groupe alkylène en C₂-C₆ à chaîne droite ou ramifiée, lequel est éventuellement substitué par des groupes hydroxy.

14. Procédé pour la préparation de composés de formule (1) selon la revendication 1, caractérisé en ce que l'on condense un composé aminodisazoïque de formule 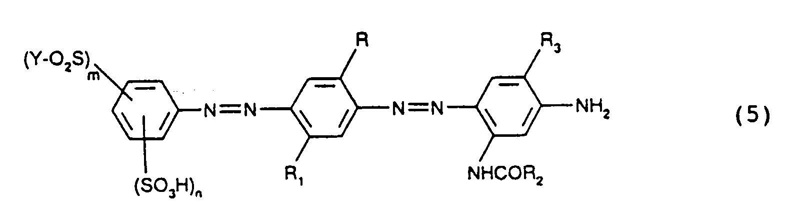 sur une triazine de formule 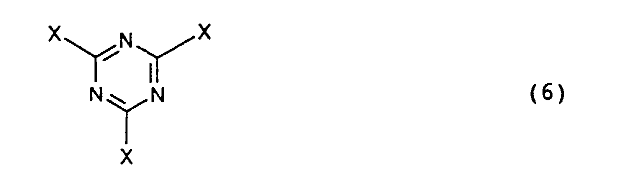 et une amine de formule
H-Z - (7)
dans une succession arbitraire, R, R₁, R₂, R₃, X, Y, Z, n et m possédant chacun la signification donnée à la revendication 1.

15. Utilisation de composés de formule (1) en tant que colorants réactifs pour la teinture ou l'impression de matières fibreuses contenant des groupes hydroxyle ou des atomes d'azote.

16. Utilisation selon la revendication 15, caractérisée en ce que l'on teint ou imprime des matières de fibres cellulosiques, en particulier des matières de fibres contenant du coton.
